# EUROPEAN PATENT SPECIFICATION

(11) **EP 1 838 552 B1**
(45) Date of publication and mention of the grant of the patent: **16.11.2011**
(21) Application number: 06717604.0
(22) Date of filing: 06.01.2006
(51) Int. Cl.: B60K 37/02

(54) **INSTRUMENT CLUSTER**
INSTRUMENTENCLUSTER
GROUPE D'INSTRUMENTS

(30) Priority: 07.01.2005 US 642239 P
(43) Date of publication of application: 03.10.2007
(73) Proprietor: Johnson Controls Technology Company, Holland, MI 49423 (US)
(72) Inventor: EICH, Rodger, W., Holland, Michigan 49423 (US)
(74) Representative: Bloch, Gérard
(86) International application number: PCT/US2006/000429
(87) International publication number: WO 2006/074349

(56) References cited:
- EP-A- 0 878 341
- DE-A1- 10 102 774
- DE-A1- 10 220 335
- DE-A1- 10 314 473
- GB-A- 2 266 374
- US-A1- 2002 085 366

## Description

### CROSS REFERENCE TO RELATED APPLICATIONS

This application claims the benefit, under Article 4 of the Paris Convention, and Rule 4 of the Patent Cooperation Treaty, of U.S. Provisional Application No. 60/642239 entitled, "Instrument Cluster" filed January 7, 2005.

### FIELD

The present application relates generally to the field of automotive display apparatus, and particularly to instrument clusters and panels for vehicles.

### BACKGROUND

DE 10102 774A discloses an instrument cluster according to the preamble of claim 1. Many vehicles include instrument clusters which display various types of information. This information may include instrumentation such as a speedometer, tachometer, fuel level gauge, etc. This information may also include a seat belt indicator, low-fuel warning, a check engine warning, an engine temperature warning, an anti-lock brake indicator, a traction control indicator, tire-pressure warnings, and/or other indicators. This information may further include turn signal indicators.

Many instrument panels and instrument clusters are designed for day and night displays. Accordingly, instrument clusters are often designed to provide readable information during the day and night, utilizing various types of lighting systems. Despite the large number of known lighting systems utilized for instrument panels and instrument clusters, most known systems typically do not provide certain aesthetically pleasing features and characteristics. For example, such known systems do not provide an instrument cluster and instrument panel which are separated by a predetermined distance and illuminated in such a manner as to provide an illusion of a floating bezel from the vantage point of a vehicle occupant In addition, such known systems do not provide instrument clusters having tick marks or other indicia that remain substantially undetectable by a vehicle occupant unless illuminated by a rear light source.

Accordingly, it would be advantageous to provide a system and method which would allow for an instrument cluster and instrument panel to be separated by a predetermined distance and to be illuminated in such a manner as to provide an illusion of a floating bezel from the vantage point of a vehicle occupant. It would further be advantageous to provide an instrument cluster with a "browless" appearance. It would further be advantageous to provide a system and method which would allow for an instrument cluster to have three-dimensional (3-D) tick marks or other indicia that remain substantially undetectable by a vehicle occupant unless illuminated by a rear light source. It would be desirable to provide a system and method that provides any one or more of these or other advantageous features.

The teachings herein extend to those embodiments which fall within the scope of the appended claims, regardless of whether they address one or more of the above-mentioned problems.

### SUMMARY

According to the invention an instrument cluster for a passenger vehicle comprises a circuit board comprising a plurality of illumination devices and a partially translucent appliqué comprising a plurality of light transmissive portions. The illumination devices are configured to illuminate the plurality of light transmissive portions and the partially translucent appliqué comprises a treatment to reflect light towards a passenger area of the vehicle. Further, the partially translucent appliqué transmits light from the plurality of illumination devices when the plurality of illumination devices emits light, the appliqué being configured to reflect less light than it transmits.

According to another embodiment, an instrument cluster for a passenger vehicle comprises an at least partially translucent material having a front and a rear, at least one light pipe proximate the rear of the partially translucent material, and a light source configured to transmit light through the at least partially translucent material at the at least one light pipe. The at least partially translucent material is configured tq reflect light.

An instrument panel for a passenger vehicle comprises an instrument panel comprising a mounting area, an instrument cluster mounted to the instrument panel at the mounting area so that the instrument panel and the instrument cluster are at least partially separated, and an illumination device located proximate a back portion of the instrument cluster, the illumination device configured to provide a halo of light around a perimeter of the instrument cluster.

A lighting device for a passenger vehicle comprises an instrument cluster, a connector coupled to the instrument cluster for connecting the instrument cluster to an instrument panel, and a light source provided on a back portion of the instrument cluster. The instrument cluster is configured so that the connector is substantially hidden from a vantage point of a passenger area of the vehicle when the instrument cluster is connected to the instrument panel. The light source is provided on the back portion of the instrument cluster so that a light wash is visible on the instrument panel around a perimeter of the instrument cluster when the light source emits light and the instrument cluster is connected to the instrument panel.

### BRIEF DESCRIPTION OF THE DRAWINGS

FIG. 1 is a front perspective view of an instrument cluster coupled to an instrument panel according to an exemplary embodiment;

FIG. 2A is an exploded front perspective view of an instrument cluster according to an exemplary embodiment;

FIG. 2B is a front perspective view of the light pipes of FIG. 2A shown in greater detail according to an exemplary embodiment;

FIG. 3 is a side elevation view of an instrument cluster according to an exemplary embodiment;

FIG. 4 is a front perspective view of an instrument cluster coupled to an instrument panel;

FIG. 5 is a front elevation view of an instrument cluster according to an exemplary embodiment;

FIG. 6 is an illustration of various cluster lighting sequences ;

FIG. 7 is an illustration of various cluster lighting themes an ; and

FIG 8 is a method.

### DETAILED DESCRIPTION

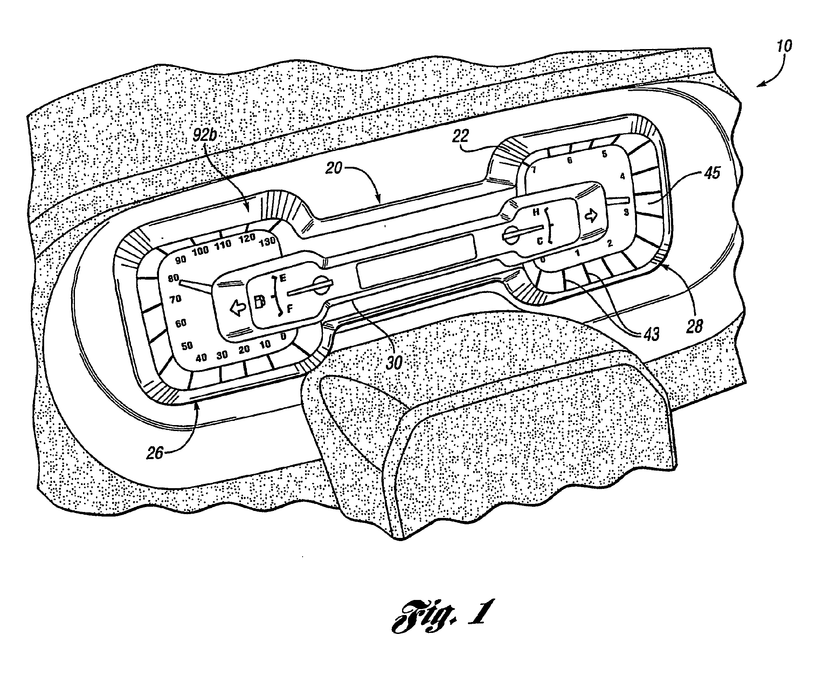

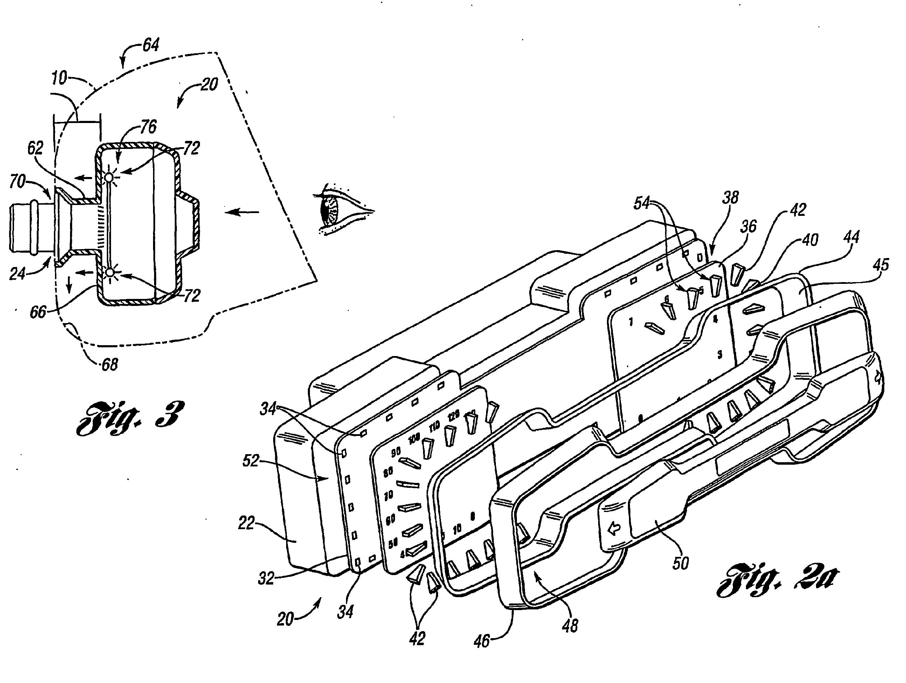

Referring to FIG. 1, an instrument cluster 20 is shown according to an exemplary embodiment. Instrument cluster 20 is an assemblage of parts configured to provide automobile data from a plurality of automobile systems to an operator of the automobile and/or to passengers of the automobile. Instrument cluster 20 comprises a housing 22 configured to be fixedly mounted to an instrument panel 10 of an automobile at one or more locations on instrument panel 10, such as in front of the operator, near the center stack, etc., or even in an overhead compartment coupled to the headliner of the vehicle. FIG. 3 shows instrument cluster 20 coupled to instrument panel 10 at mounting area 24. Instrument cluster 20 is suitable for use with an automobile, which can be any passenger vehicle used for land transportation, such as a car, minivan, truck, etc. According to alternative embodiments, the instrument cluster and panel may be used with any type of vehicle, such as water vehicles, air vehicles, etc.

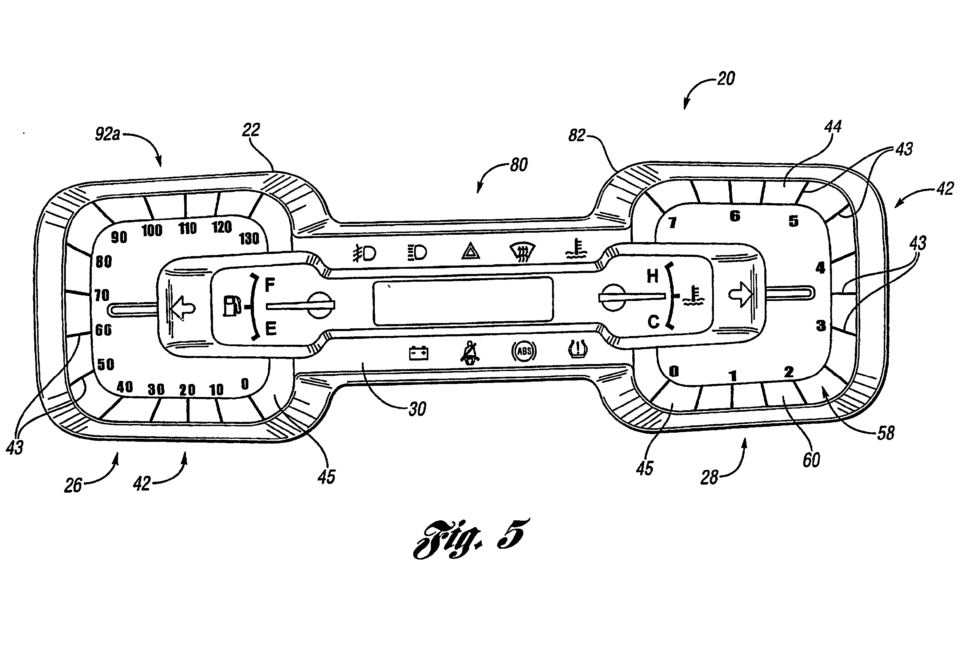

According to an exemplary embodiment, and as best shown in FIGS. 1 and 5, instrument cluster 20 provides a speedometer display 26, an engine rotations-per-minute (RPM) display 28, and a display 30 configured to display a plurality of automobile data. Automobile data can include speed, engine RPMs, engine oil temperature, fuel remaining, engine oil level, engine water temperature, engine oil pressure, instantaneous consumption, turbo rate, battery level, seat belt indicator, windshield wash level, hazard light indicator, and/or other information. Instrument cluster 20 can include more or less than the displays indicated.

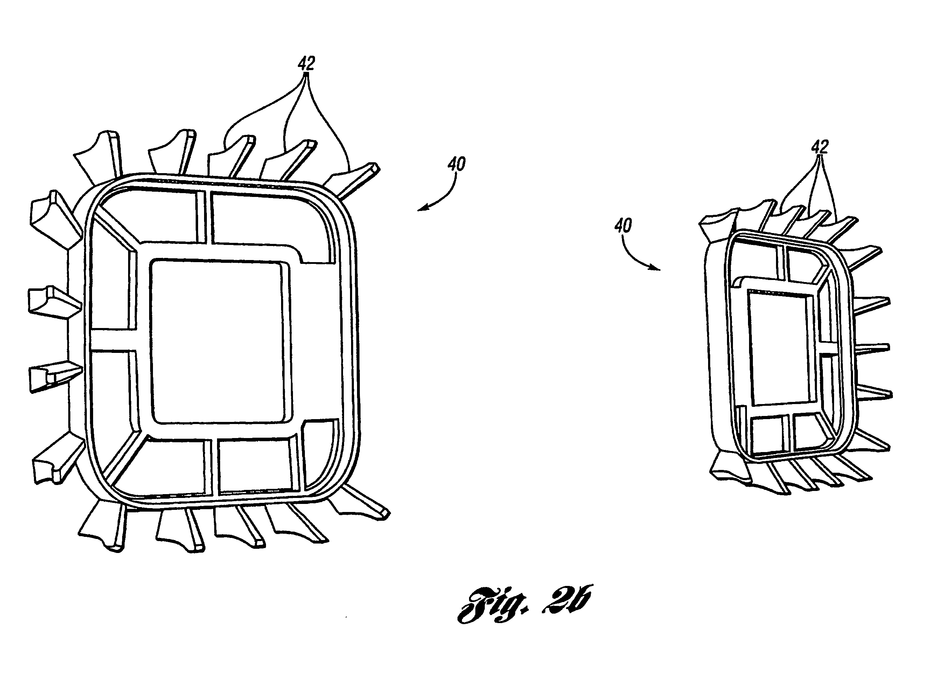

Referring now to FIGS. 2A and 2B, instrument cluster 20 and light pipes 40 are illustrated in greater detail. Instrument cluster 20 comprises housing 22, a printed circuit board 32 having a plurality of illumination devices 52 (e.g., light sources), an appliqué 36 having indicia 38 such as speed and RPM markings, light guides or light pipes 40 (e.g., plastic or other material configured to transmit light) which can be shaped in the form of light transmissive portions or tick marks 42 (e.g., lines, arrows, circles, etc.), a partially translucent appliqué 44 (e.g., a two-way mirror), a bezel 46 having a lens 48 (optional), and a subassembly 50. The printed circuit board may include a control circuit or be coupled to a control circuit. The control circuit coupled to the printed circuit board and/or the printed circuit board comprising the control circuit can comprise one or more analog and/or digital electrical or electronic components, and may include a microprocessor, microcontroller, application-specific integrated circuit (ASIC), programmable logic, and/or other circuit elements. The control circuit is configured to receive data via one or more electrical wires or buses from a plurality of automobile systems within the automobile. For example, the control circuit can be configured to receive fuel data from a fuel level sensor and engine oil temperature data from an engine oil temperature sensor on an automobile. The circuit board may be a printed circuit board, a flexible circuit board, a rigid circuit board, conductive foil, and/or other suitable form.

According to an exemplary embodiment, the plurality of illumination devices 52 comprise light emitting diodes (LEDs) 34 on printed circuit board 32 which transmit light through tick marks 42 on light pipes 40 to provide illumination to the display through partially translucent appliqué 44. The transmission of light through light pipes 40, tick marks 42, and partially translucent appliqué 44, or another display surface, provides lines, marks, or other indicia (such as 3-D illuminated areas 43 as shown on FIGS. 1 and 5) representing different values of the automobile data, wherein pointers indicate the particular value of the automobile data or parameter sensed by the respective automobile system. As shown in FIGS. 1, 2A, and 5, appliqué 44 comprises at least a portion 45 that is generally not planar.

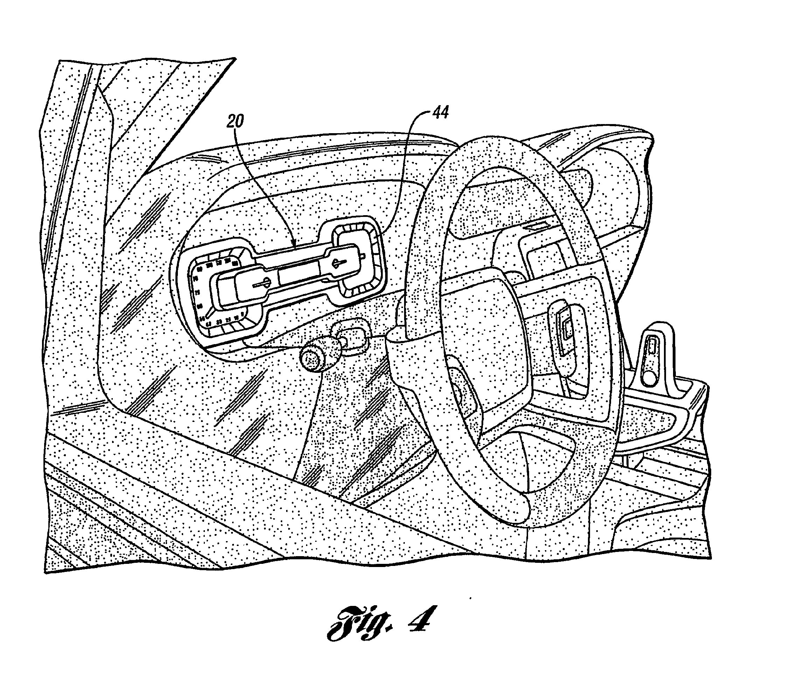

According to an exemplary embodiment illustrated in FIGS. 1 and 5, instrument cluster 20 includes illuminated areas 43 which are configured to appear three-dimensional when illuminated by LEDs 34. Light pipes 40 are configured to be applied to a back side of partially translucent appliqué 44 so that tick marks 42 are observable and/or detectable by a vehicle operator and/or occupant when LEDs 34 emit light. Further, appliqué 44 is configured so that when LEDs do not emit light, a vehicle occupant and/or operator does not observe tick marks 42. As viewed from the vantage point of an occupant and/or operator (e.g., the occupant area of the vehicle), appliqué 44 acts as a two-way mirror in this exemplary embodiment and reflects more light (from the occupant area of the vehicle) than it transmits (from LEDs 34) when LEDs 34 are not emitting light FIG. 4 provides an illustration of appliqué 44 when LEDs are not emitting light (e.g., where the reflected light is greater than the transmitted light). Without light from LEDs 34, illuminated areas 43 are not visible along the perimeter of instrument cluster 20. However, when LEDs 34 emit light, appliqué 44 transmits more light (from LEDs 34) through light pipes 40 and tick marks 42 than is reflected by appliqué 44. FIGS. 1 and 5 provide an illustration of appliqué 44 when LEDs 34 are emitting light creating an appearance of three-dimensional "floating" tick marks or illuminated areas (e.g., where the transmitted light is greater than the reflected light).

According to various exemplary embodiments, the tick marks and/or illuminated areas are observable during day and night when LEDs emit light. According to an alternative embodiment, more than one tick mark may be illuminated by a single illumination device, such as a single LED that illuminates multiple (and/or all) tick marks or light transmissive portions. According to various exemplary embodiments, the light pipes, tick marks, and illuminated areas may be any number of configurations. For example, the tick marks and illuminated areas may be oval, triangular, rectangular, 3-D, 2-D, etc. The light pipes may be a number of configurations including circular, rectangular, U-shaped, etc.

According to an exemplary embodiment shown in FIG. 5, partially translucent appliqué 44 comprises a metallic or foil appearance. Appliqué 44 can include a treatment on a front surface 58 comprising a reflective metallic substance or coating 60 to create a bezel-like appearance. Coating 60 enables appliqué 44 to be at least partially translucent in order to reflect light from the occupant area of the vehicle as well as transmit emitted light from LEDs 34 through light pipes 40 and tick marks 42 (to the occupant area of the vehicle).

As shown in FIG. 3, instrument cluster 20 is coupled to instrument panel 10 with a support or connector 62 (e.g., a stanchion, a portion of housing 22, a portion of Instrument panel 10, a separate connector, coupler, member, etc.) so that instrument cluster 20 extends a predetermined distance from instrument panel 10 (as indicated by distance D1). Instrument cluster 20 is connected to instrument panel 10 within a recess or enclosed portion 64 of instrument panel 10. The distance (e.g., D1) between a back surface 66 of Instrument cluster 20 and a front surface 68 of instrument panel 10 can vary. D1 is a distance such that instrument cluster 20 appears to float in front of instrument panel 10 as viewed (e.g., by an occupant) from the occupant area of the vehicle. Connector 62 comprises a stanchion 70 which is anchored in at least a portion of instrument panel 10 (e.g., in an aperture or opening in the instrument panel) and coupled to instrument cluster 20 according to a suitable method. Connector 62 can be structural, electrical, or have both structural and electrical components (e.g., wires for power, data, etc.).

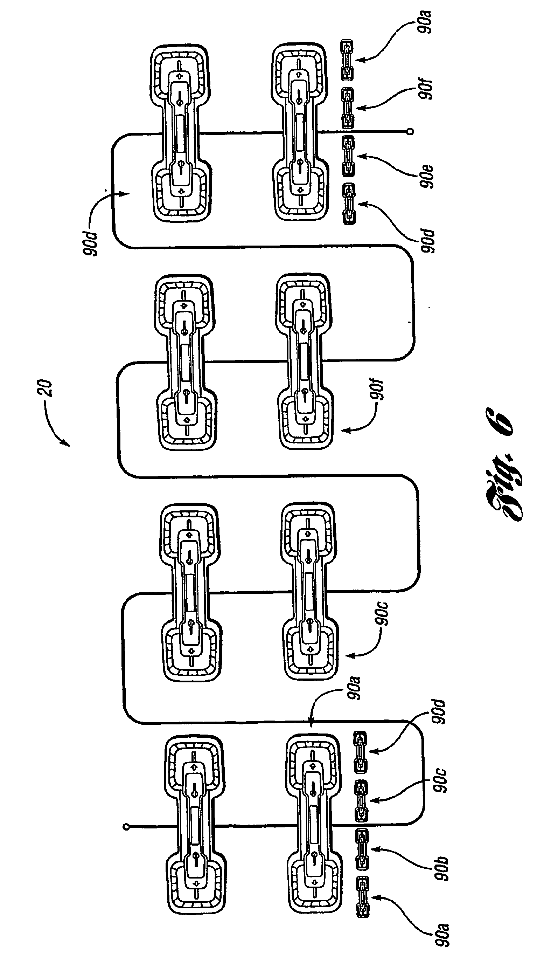

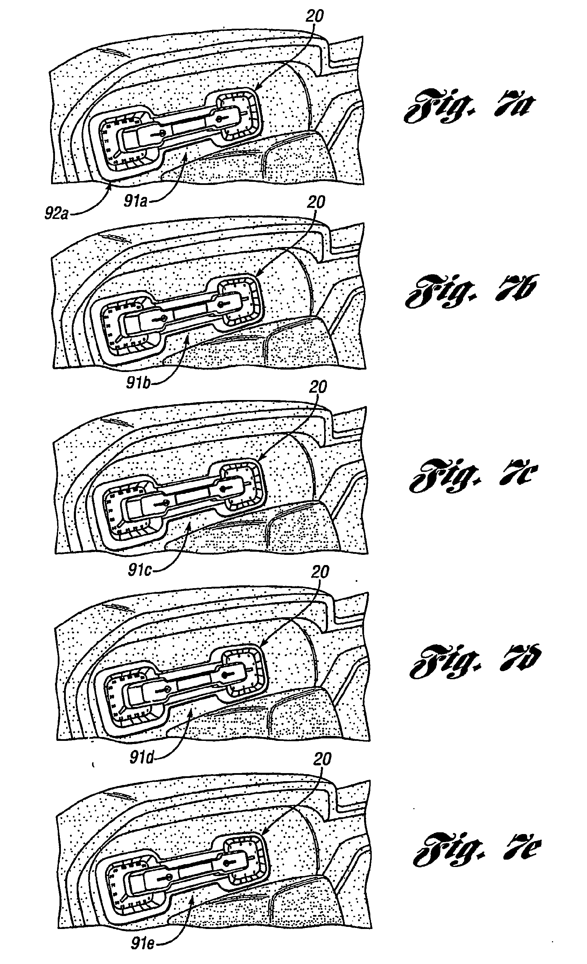

FIGS. 1 and 3 illustrate lighting that may be used as a background or light wash around instrument cluster 20. FIG. 3 shows an illumination device 72 (e.g., an LED) that extends around a perimeter of a back portion 76 of instrument cluster 20. Illumination device 72 produces a light wash against front surface 68 of recess portion 64 of instrument panel 10 when illumination device 72 emits light. Because instrument cluster 20 is coupled to instrument panel 10 with connector 62 (which is substantially hidden from the vantage point of an occupant), the light wash appears to substantially surround instrument cluster 20 as the light is reflected across surface 68 of recess portion 64. This configuration creates a "browless" appearance for instrument cluster 20 because the light wash creates a surrounding or lighted backdrop for instrument cluster 20. The lighting and connection configuration thereby create an illusion of a "floating" cluster. The illumination device may comprise a plurality of lights positioned at various locations on the back of the instrument cluster. The color of the light wash may change randomly over time, based on input from an occupant, based on data obtained from the vehicle (e.g., speed, temperatures, fuel levels, etc.) and/or may remain a single color for a predetermined period of time. FIGS. 6 and 7 provide illustrations of various lighting configurations for cluster 20. For example, FIG. 6 provides an illustration of a lighting sequence for cluster 20 where the color of the light changes over time and/or based on user input or vehicle data (e.g., blue color 90a, purple color 90b, pink color 90c, red color 90d, orange color 90e, green color 90f, or any other suitable color). FIG. 7 provides an illustration of different color themes for cluster 20 (e.g., blue color 91a, green color 91b, orange color 91c, red color 91d, pink color 91e, etc.). Of course light pipes 40 (and tick marks 42 and illuminated areas 43) may be any suitable color based on what color LEDs are utilized (e,g., orange color 92a in FIGS. 5 and 7, red color 92b in FIG. 1, etc.).

As shown in FIG. 5, instrument cluster 20 also includes indicia 80 which are provided on a sheet 82. Indicia 80 are illuminated by light sources (e.g., LEDs) that are provided within cluster 20. Indicia 80 are located on an edge of sheet 82 (which corresponds to an edge of cluster 20). Light from the light sources is carried to indicia 80 by light guides or light pipes. The light guides may be a portion of the sheet or may be separate from the sheet. The light guides may be angled such that the light enters the sheet transverse to the viewing direction of indicia 80 (e.g., into a depth of the sheet where the viewing direction is through a face of the sheet).

When not illuminated, indicia 80 may have a first visual state where they are less noticeable. When illuminated, indicia 80 may have a second visual state where they are more noticeable. The various indicia may be individually switched from the first visual state to the second visual state. Certain groups of indicia may be configured such that they can be selectively switched from the first visual state to the second visual state at the same time. A light source is utilized such that there is a high contrast between the first visual state and the second visual state for the indicia.

Indicia 80 may be embedded in a translucent sheet by disrupting the form of the sheet to create visual markings that will result in the outward transmission of light that is piped into the translucent sheet. This may be done by etching the sheet, changing the topography of the sheet, embossing the sheet, tool texturing the sheet, transferring an in-mold graphic to the sheet, foil painting the sheet, changing the crystal structure of the sheet, or by any other suitable technique. The indicia are may be added in a molding step when the sheet is formed. The indicia may be formed in a translucent sheet in three dimensions (e.g. by laser etching a 3-D image in the sheet) such that a resulting image has a three dimensional appearance. The 3-D image may be formed using a technique similar to that used by 3M or Crystology 3-D to form 3-D images in other products.

Indicia 80 are shown as tell-tales, but may also take the form of tick marks, numbers, graphics (such as a bar graph), turn indicators, or other type of indicia. Indicia may be used to create lighting effects (such as edge lighting effects) that do not convey information. The indicia may be illuminated to have a common color or may be illuminated to have different colors. Further, the multiple indicia may be formed by a common method or by a plurality of different methods.

The sheet may be configured such that various indicia are segregated from each other. This may help lessen an amount of light that pipes through the sheet from one indicia to another indicia. The indicia may be segregated from each other by using a molded score in the sheet between indicia, a cut line in the sheet between indicia, or by using some other method to create a light resistant area between the indicia. Segregation of the indicia tends to be more necessary when no light guides are used to guide light to the sheet (e.g., the light source is mounted in proximity to an entry point of the sheet) or when brighter light sources are used.

Any number of configurations may be used for the components or parts of the instrument cluster. For example, the appliqués, sheet, and light pipes may be planar, nonplanar, curved, rectangular, ovular, irregularly shaped, thick, a film, or may take some other suitable form. The parts may be translucent. The parts may be formed from plastic, from a polymer, from glass, acrylic and/or other suitable material. A traditional lens of an instrument cluster can serve as the sheet, which may be formed from a plastic material and may have a substantially planar form. A clear sheet and light pipes would result in better transmission of light. The clarity of the sheet and light pipes, the light source brightness, and the various other factors would preferably be selected such that a sufficient amount of light can reach the location of the indicia and/or tick marks to be illuminated, but such that little or no light from one indicia and/or tick marks would be able reach and illuminate other indicia carried by the sheet or light pipe.

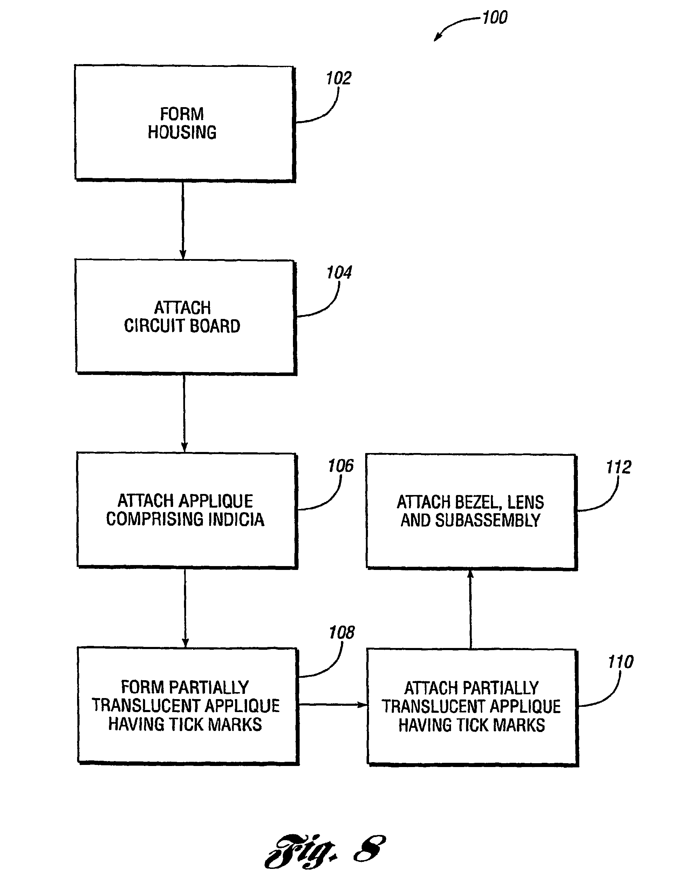

Referring to Fig. 8, a method 100 for forming an instrument cluster is illustrated. The method includes forming a housing having a light source at a rear portion of the housing at block 102, attaching a circuit board with LEDs to the housing at block 104, attaching an appliqué comprising indicia (e.g., RPMs and/or vehicle speed markings) at block 106, applying light pipes having light transmissive portions or tick marks to a partially translucent appliqué to form a partially translucent appliqué having (3-D) tick marks at block 108, attaching the partially translucent appliqué having (3-D) tick marks to the housing at block 110, and attaching a bezel, lens and subassembly to the housing at block 112. The method may include attaching a sheet carrying indicia and illuminating the light pipes, tick marks, indicia, and rear area of the instrument cluster. Forming the sheet carrying indicia may include molding the sheet in a manner configured to carry indicia (e.g., segregating indicia from each other, utilizing a molded score, etching the sheet, changing the topography of the sheet, embossing the sheet, tool texturing the sheet, transferring an in-mold graphic to the sheet, foil painting the sheet, a combination of these steps, or some other step).

Installation of the components at each block may comprise using snap connections, clip connections, adhesives, welding (e.g., sonic, laser, etc.), and/or other suitable means. Illumination from the light sources may include illuminating the indicia with one or more than one light source. The illumination may be in response to a value of a measured parameter, to a change in a vehicle condition, and/or to user input. The illuminating may be based on ignition of the engine and/or may be in response to a change in state of an accessory (e.g., radio, air conditioning, heat, interior lamp, navigation system, etc.).

The construction and arrangement of the elements of the system as shown in the exemplary, preferred and alternative embodiments is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.). without materially departing from the novel teachings and advantages of the subject matter recited. For example, elements shown as integrally formed may be constructed of multiple parts or elements shown as multiple parts may be integrally formed, the operation of fasteners, connectors, etc. may be reversed or otherwise varied, etc. It should be noted that the elements and/or assemblies of the system may be constructed from any of a wide variety of materials that provide sufficient strength or durability, including any of a wide variety of moldable plastic materials (such as high-impact plastic or plastic having various coatings, such as hard-coating material) in any of a wide variety of colors, textures and combinations. It should also be noted that the system may be used in association with any of a wide variety of types of components and/or features such as digital displays, electronic displays, etc. Accordingly, all such modifications are intended to be included within the scope of the present system. Other substitutions, modifications, changes and omissions may be made in the design, operating conditions and arrangement of the preferred and other exemplary embodiments without departing from the scope of the present system.

## Claims

1. An instrument cluster (20) for a passenger vehicle, the instrument cluster (20) comprising:
- a circuit board (32) comprising a plurality of illumination devices (52); and
- a partially translucent appliqué (44) comprising a plurality of light transmissive portions (42), wherein the illumination devices are configured to illuminate the plurality of light transmissive portions (42) ;
- the partially translucent appliqué (44) transmits light from the plurality of illumination devices (52) when the plurality of illumination devices emits light; **characterized in that** the partially translucent appliqué (44) comprises a treatment to reflect light towards a passenger area of the vehicle and wherein the appliqué (44) is configured to reflect less light than it transmits.

2. The instrument cluster of Claim 1 wherein the illumination devices (52) comprise light-emitting diodes (34).

3. The instrument cluster of Claim 1 wherein the treatment comprises a reflective metallic coating (60) capable of transmitting light towards the passenger area of the vehicle.

4. The instrument cluster of Claim 1 wherein the light transmissive portions (42) are generally not visible unless the illumination devices (52) transmit light through a light pipe (40).

5. The instrument cluster of Claim 4 wherein the light transmissive portions (42) correspond to tick marks (42) provided on the light pipe (40).

6. The instrument cluster of Claim 5 wherein the tick marks (42) create an appearance of a three-dimensional illuminated area on the appliqué (44) as viewed from a passenger area of the vehicle when light is transmitted through the light pipe (40).

7. The instrument cluster of Claim 1 wherein the appliqué is coupled to a light pipe (40) comprising tick marks (42).

## Patentansprüche

1. Kombiinstrument (20) für ein Personenfahrzeug, wobei das Kombiinstrument (20) Folgendes umfasst:
- eine Leiterplatte (32), umfassend mehrere Leuchtvorrichtungen (52); und
- eine teilweise durchscheinende Applikation (44), umfassend mehrere lichtdurchlässige Abschnitte (42), wobei die Leuchtvorrichtungen dazu ausgebildet sind, die mehreren lichtdurchlässigen Abschnitte (42) zu beleuchten;
- wobei die teilweise durchscheinende Applikation (44) Licht von den mehreren Leuchtvorrichtungen (52) überträgt, wenn die mehreren Leuchtvorrichtungen Licht ausstrahlen;
**dadurch gekennzeichnet, dass** die teilweise durchscheinende Applikation (44) eine Behandlung umfasst, um Licht zu einem Fahrgastbereich des Fahrzeugs zu reflektieren und wobei die Applikation (44) dazu ausgebildet ist, weniger Licht zu reflektieren als sie überträgt.

2. Kombiinstrument nach Anspruch 1, wobei die Leuchtvorrichtungen (52) Leuchtdioden (34) umfassen.

3. Kombiinstrument nach Anspruch 1, wobei die Behandlung eine reflektierende Metallbeschichtung (60) umfasst, die in der Lage ist, Licht zum Fahrgastbereich des Fahrzeugs zu übertragen.

4. Kombiinstrument nach Anspruch 1, wobei die lichtdurchlässigen Abschnitte (42) allgemein nicht sichtbar sind, es sei denn die Leuchtvorrichtungen (52) übertragen Licht durch eine Lichtröhre (40).

5. Kombiinstrument nach Anspruch 4, wobei die lichtdurchlässigen Abschnitte (42) auf der Lichtröhre (40) vorgesehenen Skalenstrichen (42) entsprechen.

6. Kombiinstrument nach Anspruch 5, wobei die Skalenstriche (42) bei Betrachtung von einem Fahrgastbereich des Fahrzeugs eine Erscheinung eines dreidimensionalen beleuchteten Bereichs auf der Applikation (44) erzeugen, wenn Licht durch die Lichtröhre (40) übertragen wird.

7. Kombiinstrument nach Anspruch 1, wobei die Applikation an eine Skalenstriche (42) umfassende Lichtröhre (40) gekoppelt ist.

## Revendications

1. Groupe d'instruments (20) pour véhicule particulier, le groupe d'instruments (20) comprenant :
- une plaquette de circuit imprimé (32) comprenant une pluralité de dispositifs d'éclairage (52) ; et
- une applique partiellement transparente (44) comprenant une pluralité de portions photoémettrices (42), dans lequel les dispositifs d'éclairage sont configurés pour éclairer la pluralité de portions photoémettrices (42) ;
- l'applique partiellement transparente (44) émettant de la lumière de la pluralité de dispositifs d'éclairage (52) lorsque la pluralité de dispositifs d'éclairage émet de la lumière ; **caractérisé en ce que** l'applique partiellement transparente (44) comprend un traitement pour réfléchir de la lumière vers un espace passager du véhicule et dans lequel l'applique (44) est configurée pour réfléchir moins de lumière qu'elle n'en émet.

2. Groupe d'instruments selon la revendication 1, dans lequel les dispositifs d'éclairage (52) comprennent des diodes électroluminescentes (34).

3. Groupe d'instruments selon la revendication 1, dans lequel le traitement comprend un revêtement métallique réfléchissant (60) capable d'émettre de la lumière vers l'espace passager du véhicule.

4. Groupe d'instruments selon la revendication 1, dans lequel les portions photoémettrices (42) ne sont généralement pas visibles à moins que les dispositifs d'éclairage (52) n'émettent de la lumière à travers un tube guide-lumière (40).

5. Groupe d'instruments selon la revendication 4, dans lequel les portions photoémettrices (42) correspondent à des repères (42) disposés sur le tube guide-lumière (40).

6. Groupe d'instruments selon la revendication 5, dans lequel les repères (42) créent l'aspect d'une région éclairée tridimensionnelle sur l'applique (44) telle qu'elle est observée depuis un espace passager du véhicule lorsque de la lumière est émise à travers le tube guide-lumière (40).

7. Groupe d'instruments selon la revendication 1, dans lequel l'applique est couplée à un tube guide-lumière (40) comprenant des repères (42).
